# EUROPEAN PATENT SPECIFICATION

(11) **EP 2 865 867 B1**
(45) Date of publication and mention of the grant of the patent: **04.05.2016**
(21) Application number: 14190171.0
(22) Date of filing: 23.10.2014
(51) Int. Cl.: F02C 7/22, F02C 7/25, F16L 57/04, F16L 59/02, F16L 59/14, F16L 3/00

(54) **Enhanced fire protection for fuel manifold**
Verbesserter Brandschutz für Kraftstoffverteiler
Protection anti-incendie améliorée pour collecteur de combustible

(30) Priority: 28.10.2013 US 201361896384 P; 26.02.2014 US 201414190794
(43) Date of publication of application: 29.04.2015
(73) Proprietor: Delavan Inc., West Des Moines, IA 50265 (US)
(72) Inventor: BLEEKER, Daniel Edward, Ankeny, IA 50023 (US)
(74) Representative: Leckey, David Herbert

(56) References cited:
- EP-A1- 2 634 380
- FR-A1- 2 504 195
- FR-A1- 2 521 637
- US-A- 5 211 005
- US-A1- 2009 178 411

## Description

### BACKGROUND

The present embodiments relate generally to fuel manifolds and, more particularly, to fire protection of fuel manifolds for gas turbine engines under high temperature conditions.

Fuel manifolds in gas turbine engines are used to distribute fuel from a fuel control system to fuel injectors affixed around the engine case. The fuel injectors spray fuel into the combustor of the engine where high temperatures ignite the fuel and create energy. Since a fuel manifold contains fuel at all times during engine operation, there is a special interest in ensuring a fuel manifold is adequately protected in the event of a fire inside the engine. Fuel manifold fire protection systems have been developed to prevent fuel in the manifold from leaking in the event of a fire outside the engine for a period of time.

The Federal Aviation Administration (FAA), for example, sets testing standards for passenger aircraft fuel systems to ensure their safe operation under prolonged exposure to flames. The FAA requires gas turbine engine fuel manifolds, on passenger aircraft, pass a five minute fire resistance test at a minimum flow condition. This test uses a flame calibration of 2000°F (1093°C) minimum average temperature. Fuel manifold fire protection systems were typically designed by trial and error fire testing at an average temperature lower than 2000°F (1093°C) minimum average temperature. As a result, these fire protection systems fail at 2000°F (1093°C) minimum average temperature. Moreover, fuel manifold fire protection systems that may be capable of withstanding 2000°F (1093°C) minimum average temperature at a minimum flow condition make inspection of the fuel manifold extremely complicated as these fuel manifold fire protection systems tend to be one complete, cohesive blanket. Inspection currently necessitates the use of special tools, is time-consuming, and may ruin the fire protection system in the process, requiring replacement.

FR 2521637 A1 discloses a gas turbine engine coupling in which a fuel deflector is arranged around the coupling and held in position by a clamp.

US 2009/178411 A1 and US 5211005 A disclose gas turbine engine fuel manifolds.

### SUMMARY

From a first aspect, the present invention provides a fuel manifold segment for a gas turbine engine, as set forth in claim 1.

From a second aspect, the invention also provides a method of providing fire protection on a fuel manifold for a gas turbine engine, as set forth in claim 10.

### BRIEF DESCRIPTION OF THE DRAWINGS

FIG. 1 is a side-elevational view of an installed fuel manifold fire protection system on a gas turbine engine.
FIG. 2 is a cut-away perspective view of a fuel manifold segment of FIG. 1.
FIG. 3a is a side-elevational view of an exposed connector joined to a fuel injector inlet fitting.
FIG. 3b is a perspective view of the connector of FIG. 3a with a boot being fitted around the connector, in accordance with the invention.
FIG. 3c is a perspective view of the connector of FIG. 3a with a boot cover.
FIG. 4a is a perspective view, of an arrangement of a portion of a fuel manifold segment without a cuff, and which falls outside the scope of the invention.
FIG. 4b is a perspective view of the same fuel manifold segment portion of FIG. 4a with a custom cuff molded on, but which also falls outside the scope of the invention.

### DETAILED DESCRIPTION

Fuel manifolds are present in various types of engines and serve to distribute fuel inside an engine. One embodiment includes a fire protection system for a fuel manifold, particularly a fuel manifold for a gas turbine engine. Fuel manifold fire protection is increased as more exposed metal of the fuel manifold is covered with fire protective material, as this prevents the fuel manifold from absorbing additional heat. One embodiment provides improved fuel manifold fire resistance by affording more fuel manifold metal coverage, while at the same time allowing for easy in service fuel manifold inspection without destroying the fuel manifold's fire protection. This embodiment includes, among other components, a second firesleeve, a cuff, and a boot.

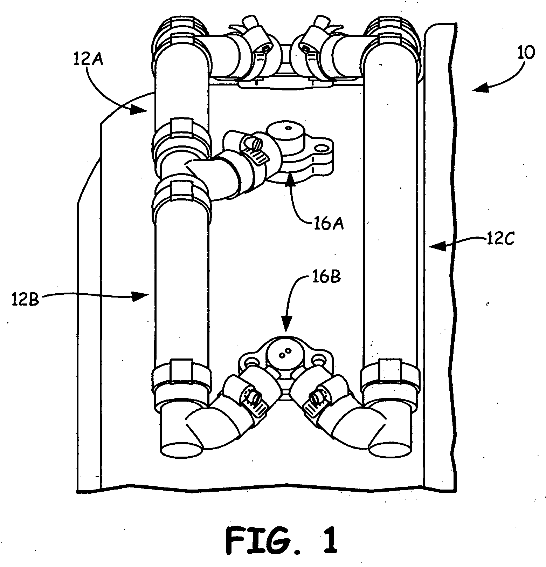

FIG. 1 shows a side-elevational view of one embodiment of fuel manifold fire protection system 10 installed on a gas turbine engine. However, this is only an illustrative embodiment, as fuel manifold fire protection system 10 can be used on any fuel manifold which needs fire protection from high temperatures. Fuel manifold fire protection system 10 includes fuel manifold segments 12A, 12B, and 12C, and fuel injector tops 16A and 16B. Fuel manifold segment 12A connects the fuel supply (not shown) to fuel injector top 16A and fuel manifold segment 12B. Fuel manifold segment 12B connects fuel manifold segment 12A to fuel injector top 16B. Fuel manifold segment 12C connects the fuel supply to fuel injector top 16B.

Fuel manifold fire protection system 10 in FIG. 1, therefore, is made up of a plurality of fuel manifold segments, with each fuel manifold segment extending between fuel injector tops circumferentially and in close proximity to the engine case. Fuel manifold fire protection system 10 functions to distribute fuel from the fuel supply to each fuel injector. Additionally, fuel manifold fire protection system 10 provides a fire protection system for a fuel manifold which is capable of withstanding a fire at least at 2000°F (1093°C) minimum average temperature at a very low flow rate in the fuel line for a period of at least 5 minutes. The fire protection system shown in FIG. 1 is a fire protection solution for low or very low flow rates. Low or very low flow rates vary depending on the size of the engine and diameter of the fuel line. For example, fuel manifold fire protection system 10 has passed AS1055 fire testing procedures for flexible hoses which requires a dash 3 size (3/16") (4.76 mm) hose to contain a flow rate of 1 ID², or 0.019 gal/min (0.072 l/min), and a dash 6 size (6/16" (9.52 mm) or 3/8" (9.52 mm)) hose to contain a flow rate of 1 ID² or 0.098 gal/min (0.371 l/min). However, low or very low flow rates can include rates nominally above zero such as 0.001 gal/min (0.004 l/min) in the fuel line.

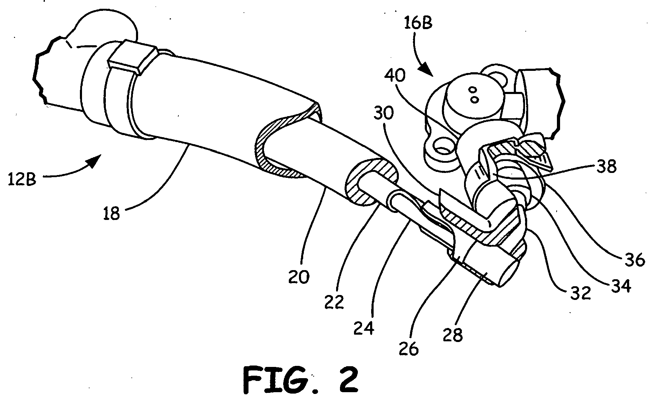

FIG. 2 shows a perspective cut-away view of fuel manifold segment 12B. Fuel manifold segment 12B includes second firesleeve 18, first firesleeve 20, reinforcing layer 22 over fuel line 24, crimp collar 26 and hose insert 28 at the end of fuel line 24, pigtail line 32, cuff 30, connector 34, boot 36, clamp 38, and fuel injector inlet fitting 40. Fuel manifold segment 12B serves to distribute fuel to fuel injector top 16B.

Second firesleeve 18 surrounds first firesleeve 20 and a portion of cuff 30 and is secured in place over and around first firesleeve 20 and a portion of cuff 30. First firesleeve 20 is integrally extruded and surrounds reinforcing layer 22. Reinforcing layer 22 surrounds fuel line 24 and is attached to hose insert 28 by crimp collar 26. Pigtail line 32 is connected to hose insert 28 and provides an internal fuel passage therethrough between fuel line 24 and fuel injector top 16B. Cuff 30 is molded over pigtail line 32, a portion of fuel line 24 to which pigtail line 32 is connected, and a portion of first firesleeve 20. Cuff 30 ends after covering a portion of first firesleeve 20, and second firesleeve 18 then surrounds the remaining portion of first firesleeve 20, the point where cuff 30 meets first firesleeve 20, and a portion of cuff 30. Connector 34 has a hydraulic fitting next to it and serves to join fuel injector inlet fitting 40 to pigtail line 32 allowing fuel to pass into fuel injector. Boot 36 is fitted around and surrounds connector 34 and is secured in place with clamp 38.

Second firesleeve 18 can be made up of any type of fire protective material, including fiber reinforced silicone rubber or AS 1072 fiberglass silicone rubber material available from AB Technology Group, Ogdensburg, New York. Second firesleeve 18 is an additional layer that surrounds the first firesleeve and a portion of cuff 30, rather than a layer within the first firesleeve 20. Second firesleeve 18 can be secured in place in various ways, including where second firesleeve 18 is molded, spirally wrapped, or clamped in place. Any type of clamp can be used to secure second firesleeve 18 in place, including metal band clamps on each end of second firesleeve 18 as shown in FIG. 1.

First firesleeve 20 can be made, for example, of a silicone rubber material. Reinforcing layer 22 provides support for fuel line 24 and can be, for instance, wire braid as present in FIG. 2. Fuel line 24 can be, for example, a polytetrafluoroethylene (PTFE) liner. Cuff 30 is of a custom size and shape fit to the particular size fuel manifold segment it is being used on and can be made of silicone rubber material. Connector 34 can be, for example, a nut as shown in FIG. 2 which screws onto fuel injector inlet fitting 40.

Boot 36 is purpose built for fire protection and can be made of any fire resistant material, including a fiber reinforced rubber material. Boot 36 can be a split cylinder with an overlap fitted in place by wrapping boot 36 around connector 34 such that the split cylinder overlaps at a point, then securing boot 36 in place with a clamp. The clamp can be, for example, a screw adjustable clamp as shown in FIG. 1, a band clamp, or a metal Panduit clamp. Alternatively, boot 36 can be a continuous cylinder (with no overlap) put in place prior to the connector being secured to the fuel injector inlet fitting 40, then slid back to allow the connector to be secured, and finally slid back in place and clamped after the connector is secured.

Fuel manifold segment 12B, with the use of second firesleeve 18, cuff 30, and boot 36, among its other components, leaves little to no fuel manifold metal exposed and, therefore, prevents the fuel manifold from absorbing additional heat. This in turn allows fuel manifold segment 12B to withstand a greater temperature without failure. For example, fuel manifold segment 12B can withstand fire at 2000°F (1093°C) minimum average temperature at a very low flow rate in the fuel line for a period of at least 5 minutes.

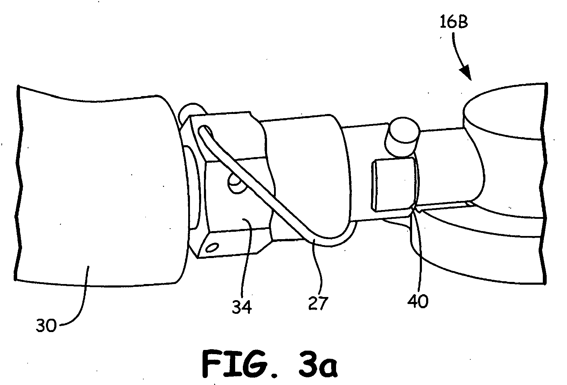

FIG. 3a shows a side-elevational view of exposed connector 34 joined to fuel injector inlet fitting 40 of fuel injector top 16B. Cuff 30 is molded onto the fuel manifold segment and provides coverage up until the pigtail line (not shown) meets connector 34. Connector 34 is made up of a nut and a hydraulic fitting which mates with the fuel injector inlet fitting 40. Also present is antirotation thread locking safety cable 27, which is installed for safety to prevent connector 34 from rotating and becoming disconnected from fuel injector inlet fitting 40, resulting in a fuel leak.

When no boot is present, connector metal is exposed and as a result the fuel manifold segment of FIG. 3a may fail at a lower temperature than otherwise would be the case if fire protection was present. For this reason, a boot is fitted around connector 34 to provide fire protection to the fuel manifold segment in this location.

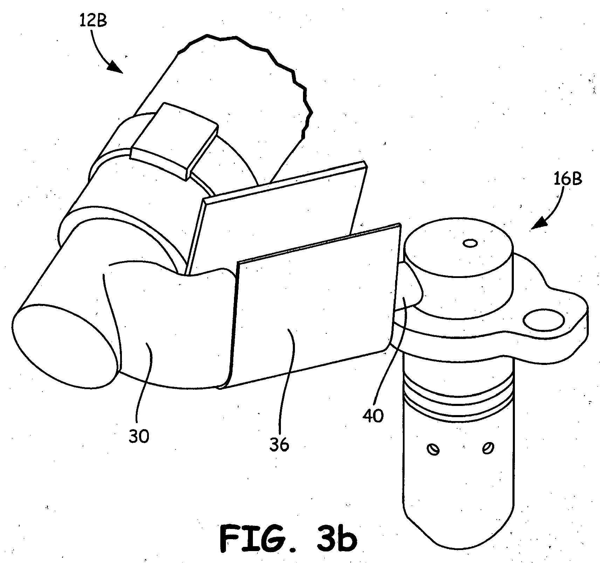

FIG. 3b is a perspective view of fuel manifold segment 12B, fuel injector top 16B, and connector (not shown) of FIG. 3a with boot 36 being fitted around the connector. Boot 36 is similar to that detailed for FIG. 2. Also present is cuff 30 molded onto a portion of fuel manifold segment 12B, and fuel injector inlet fitting 40. In this embodiment, boot 36 is a split cylinder with an overlap. Boot 36 is fitted around the connector by wrapping the split cylinder to cover the connector such that the split cylinder overlaps when the connector is covered.

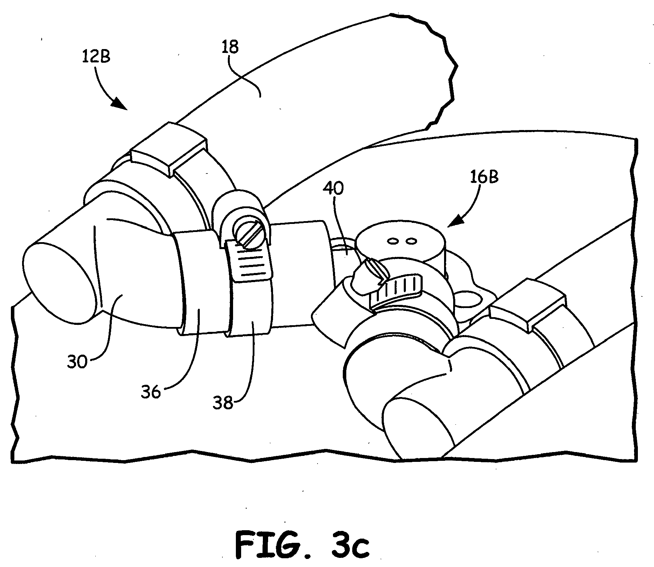

FIG. 3c shows a perspective view of fuel manifold segment 12B, fuel injector top 16B, and connector (not shown) of FIG. 3a with boot 36 from FIG. 3b fitted around the connector. Boot 36 is secured in place by clamp 38. Also present in FIG. 3c is second firesleeve 18, cuff 30 molded onto fuel manifold segment 12B, and fuel injector inlet fitting 40.

In the embodiment shown in FIG. 3c, clamp 38 is a screw adjustable clamp. However, clamp 38 can also be, for example, a band clamp or a metal Panduit clamp. The screw adjustable clamp 38 in FIG. 3c can be removed simply by using a common tool, such as a screwdriver. This allows boot 36 to be removed from fuel manifold segment 12B in service quickly and easily to inspect the underlying connection for a leak, without having to procure special tools to remove or destroy the entire fuel manifold segment fire protection system and the added time and costs which come with doing so. This enables any person with a screwdriver and a flashlight to remove boot 36 for inspection. After removing boot 36 and inspecting the connection, boot 36 can then again be fitted around the connector and secured in place with clamp 38 using a common tool. If boot 36 is instead a continuous cylinder (no overlap), it can be slid out of the way to expose the connector to allow for inspection, and slid back into place and clamped after inspection. In addition to allowing for easy and quick inspection, the ability to reuse boot 36 and clamp 38 saves on replacement costs.

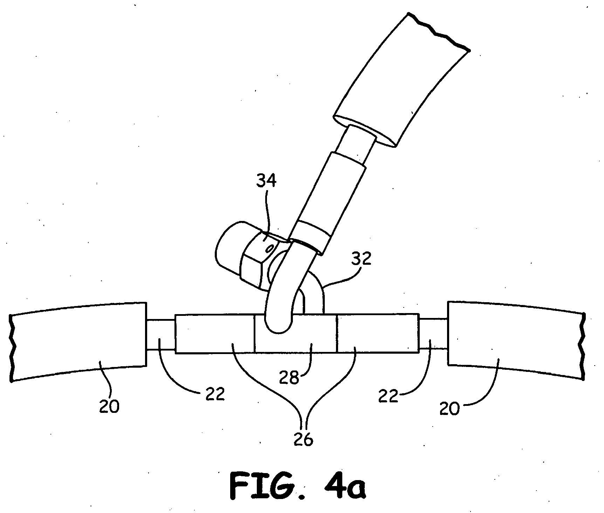

FIG. 4a is a perspective view of a portion of a fuel manifold segment of another arrangement which falls outside the scope of the claimed invention without a cuff molded on. FIG. 4a includes first firesleeve 20 trimmed back, exposing reinforcing layer 22, crimp collar 26, hose insert 28, pigtail line 32, and connector 34. First firesleeve 20 can be integrally extruded over reinforcing layer 22. Alternately, first firesleeve 20 can be installed by sliding it over reinforcing layer 22 during the manifold assembly process. Reinforcing layer 22 is attached to hose insert 28 by crimp collar 26. Pigtail line 32 is joined to hose insert 28 and provides an internal fuel passage therethrough between fuel line and fuel injector. Connector 34 provides a connection between fuel injector inlet fitting and pigtail line 32.

When no cuff is present, as in FIG. 4a, fuel manifold fitting metal portions are exposed and in the presence of a fire may fail at a lower temperature than otherwise would be the case if fire protection was present. For this reason, a custom molded cuff is used to provide fire protection to the fuel manifold in this location.

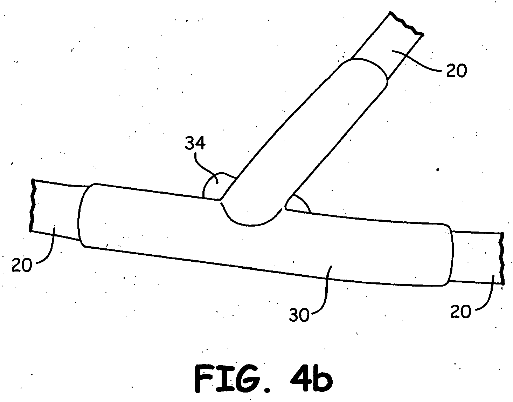

FIG. 4b (which is also of an arrangement which falls outside the scope of the claimed invention) is a perspective view of the same fuel manifold segment portion of FIG. 4a, but with custom cuff 30 molded on. Cuff 30 ends at connector 34 and extends to surround a portion of first firesleeve 20. Cuff 30 is of a custom size and shape fit to the particular size fuel manifold segment it is being used on. Cuff 30 is sized and shaped to cover and fit over and around the pigtail line, the reinforcing layer and thus the fuel line to which the pigtail line is connected through the crimp collar and hose insert (all exposed and shown in FIG. 4a), and a portion of first firesleeve 20. The shape can be such that it covers the hose insert and crimp collar then extends out from the hose insert to further cover the pigtail line. Once of a size and shape so as to cover these parts of the fuel manifold segment, cuff 30 is molded into place. Cuff 30 can be made of any fire resistant material, but preferably is made of silicone rubber material.

Cuff 30 provides added fire protection to the fuel manifold segment by covering otherwise exposed reinforcing layer, crimp collar, hose insert, and pigtail line, as is shown in FIG. 4a. This added fire protection provided by cuff 30 allows the fuel manifold segment to withstand higher temperatures without failing.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fuel manifold segment (12) for a gas turbine engine for supplying fuel to a fuel injector, the fuel manifold segment comprising:
a fuel line (24) surrounded by a first firesleeve (20);
a pigtail line (32) connected to the fuel line (24);
a connector (34) on the pigtail line (32) for connecting to a fuel injector inlet fitting (40);
a second firesleeve (18) surrounding the first firesleeve (20);
a cuff (30) surrounds the pigtail line (32), a portion of the first firesleeve (20), and a portion of the fuel line (24) to which the pigtail line (32) is connected; and
a boot (36) surrounding the connector (34).

2. The fuel manifold segment of claim 1 wherein the fuel line (24) is a polytetrafluoroethylene liner.

3. The fuel manifold segment of claim 1 or 2 wherein the fuel line (24) is surrounded by a reinforcing layer (22).

4. The fuel manifold segment of claim 3 wherein the reinforcing layer (22) is a wire braid.

5. The fuel manifold segment of any preceding claim wherein the first firesleeve (20) is made of a silicone rubber material.

6. The fuel manifold segment of any preceding claim wherein the second firesleeve (18) is a fiberglass silicone rubber material secured in place by a metal band clamp.

7. The fuel manifold segment of any preceding claim wherein the connector (34) comprises a nut and a hydraulic fitting which mate with the fuel injector inlet fitting (40).

8. The fuel manifold segment of any preceding claim wherein the boot (36) is secured in place by a screw adjustable clamp (38) such that the boot (36) can be put in place and removed with a common tool.

9. The fuel manifold segment of any preceding claim wherein the boot (36) is made of a fiber reinforced rubber material.

10. A method of providing fire protection for a fuel manifold (12) for a gas turbine engine comprising:
fitting a boot (36) around a connector (34) on a pigtail line (32) for connecting to a fuel injector inlet fitting (40);
securing the boot (36) in place with a clamp (38); and
surrounding a fuel line (24) with a first firesleeve (20);
surrounding the first firesleeve (20) with a second firesleeve (18); and
molding a cuff (30) over the pigtail line (32), a portion of the first firesleeve (20), and a portion of the fuel line (24) to which the pigtail (32) is connected.

11. The method of claim 10 wherein the connector (34) comprises a nut and a hydraulic fitting which mate with the fuel injector inlet fitting (40).

12. The method of claim 10 or 11 wherein the clamp (38) is screw adjustable such that the boot can be put in place and removed with a common tool.

13. The method of claim 10, 11 or 12 wherein the boot (36) is a continuous cylinder.

## Patentansprüche

1. Kraftstoffverteilersegment (12) für einen Gasturbinenmotor zum Leiten von Kraftstoff an einen Kraftstoffeinspritzer, wobei das Kraftstoffverteilersegment Folgendes umfasst:
eine Kraftstoffleitung (24), die von einer ersten Brandschutzmanschette (20) umgeben ist;
eine Anschlussleitung (32), die mit der Kraftstoffleitung (24) verbunden ist;
einen Anschluss (34) an der Anschlussleitung (32) zum Verbinden mit einem Kraftstoffeinspritzeinlassstutzen (40);
eine zweite Brandschutzmanschette (18), die die erste Brandschutzmanschette (20) umgibt;
eine Manschette (30) umgibt die Anschlussleitung (32), einen Abschnitt der ersten Brandschutzmanschette (20) und einen Abschnitt der Kraftstoffleitung (24), mit dem die Anschlussleitung (32) verbunden ist; und
eine Tülle (36), die den Anschluss (34) umgibt.

2. Kraftstoffverteilersegment nach Anspruch 1, wobei die Kraftstoffleitung (24) eine Polytetrafluorethylenummantelung ist.

3. Kraftstoffverteilersegment nach Anspruch 1 oder 2, wobei die Kraftstoffleitung (24) von einer Verstärkungsschicht (22) umgeben ist.

4. Kraftstoffverteilersegment nach Anspruch 3, wobei die Verstärkungsschicht (22) ein Drahtgeflecht ist.

5. Kraftstoffverteilersegment nach einem der vorangehenden Ansprüche, wobei die erste Brandschutzmanschette (20) aus einem Silikongummimaterial hergestellt ist.

6. Kraftstoffverteilersegment nach einem der vorangehenden Ansprüche, wobei die zweite Brandschutzmanschette (18) ein Glasfasersilikongummimaterial ist und durch ein Metallspannband an ihrer Position befestigt ist.

7. Kraftstoffverteilersegment nach einem der vorangehenden Ansprüche, wobei der Anschluss (34) eine Mutter und einen Hydraulikanschlussstutzen umfasst, die mit dem Kraftstoffeinspritzeinlassstutzen (40) zusammenpassen.

8. Kraftstoffverteilersegment nach einem der vorangehenden Ansprüche, wobei die Tülle (36) durch eine schraubverstellbare Klemme (38) an ihrer Position befestigt ist, derart, dass die Tülle (36) mit einem üblichen Werkzeug in ihrer Position angeordnet und entfernt werden kann.

9. Kraftstoffverteilersegment nach einem der vorangehenden Ansprüche, wobei die Tülle (36) aus einem faserverstärkten Gummimaterial hergestellt ist.

10. Verfahren zum Bereitstellen von Brandschutz für einen Kraftstoffverteiler (12) für einen Gasturbinenmotor, umfassend:
Aufsetzen einer Tülle (36) um einen Anschluss (34) an einer Anschlussleitung (32) zum Verbinden mit einem Kraftstoffeinspritzeinlassstutzen (40);
Befestigen der Tülle (36) mit einer Klemme (38) an ihrer Position; und
Umgeben der Kraftstoffleitung (24) mit einer ersten Brandschutzmanschette (20);
Umgeben der ersten Brandschutzmanschette (20) mit einer zweiten Brandschutzmanschette (18); und
Formen einer Manschette (30) über die Anschlussleitung (32), einen Abschnitt der ersten Brandschutzmanschette (20) und einen Abschnitt der Kraftstoffleitung (24), mit dem die Anschlussleitung (32) verbunden ist.

11. Verfahren nach Anspruch 10, wobei der Anschluss (34) eine Mutter und einen Hydraulikanschlussstutzen umfasst, die mit dem Kraftstoffeinspritzeinlassstutzen (40) zusammenpassen.

12. Verfahren nach Anspruch 10 oder 11, wobei die Klemme (38) schraubverstellbar ist, derart, dass die Tülle mit einem üblichen Werkzeug angebracht und entfernt werden kann.

13. Verfahren nach Anspruch 10, 11 oder 12, wobei die Tülle (36) ein durchgehender Zylinder ist.

## Revendications

1. Segment de collecteur de carburant (12) pour un moteur à turbine à gaz pour fournir un carburant à un injecteur de carburant, le segment de collecteur de carburant comprenant :
une conduite de carburant (24) entourée par un premier fourreau pare-feu (20) ;
une conduite élastique (32) raccordée à la conduite de carburant (24) ;
un raccord (34) sur la conduite élastique (32) pour se raccorder à une ferrure d'entrée d'injecteur de carburant (40) ;
un second fourreau pare-feu (18) entourant le premier fourreau pare-feu (20) ;
un manchon (30) entourant la conduite élastique (32), une portion du premier fourreau pare-feu (20), et une portion de la conduite de carburant (24) à laquelle la conduite élastique (32) est raccordée ; et
une gaine (36) entourant le raccord (34).

2. Segment de collecteur de carburant selon la revendication 1, dans lequel la conduite de carburant (24) est un revêtement en polytétrafluoroéthylène.

3. Segment de collecteur de carburant selon la revendication 1 ou 2, dans lequel la conduite de carburant (24) est entourée par une couche de renfort (22).

4. Segment de collecteur de carburant selon la revendication 3, dans lequel la couche de renfort (22) est une tresse en fil métallique.

5. Segment de collecteur de carburant selon l'une quelconque revendication précédente, dans lequel le premier fourreau pare-feu (20) est fait d'un matériau caoutchouc de silicone.

6. Segment de collecteur de carburant selon l'une quelconque revendication précédente, dans lequel le second fourreau pare-feu (18) est un matériau caoutchouc de silicone à fibres de verre fixé en place par un dispositif de serrage à bande métallique.

7. Segment de collecteur de carburant selon l'une quelconque revendication précédente, dans lequel le raccord (34) comprend un écrou et une ferrure hydraulique qui s'accouplent avec la ferrure d'entrée d'injecteur de carburant (40).

8. Segment de collecteur de carburant selon l'une quelconque revendication précédente, dans lequel la gaine (36) est fixée en place par un dispositif de serrage ajustable par vis (38) de telle sorte que la gaine (36) puisse être mise en place et ôtée avec un outil ordinaire.

9. Segment de collecteur de carburant selon l'une quelconque revendication précédente, dans lequel la gaine (36) est faite d'un matériau caoutchouc renforcé de fibres.

10. Procédé de fourniture de protection contre l'incendie pour un collecteur de carburant (12) pour un moteur à turbine à gaz comprenant :
l'installation d'une gaine (36) autour d'un raccord (34) sur une conduite élastique (32) pour se raccorder à une ferrure d'entrée d'injecteur de carburant (40) ;
la fixation de la gaine (36) en place avec un dispositif de serrage (38) ; et
la disposition d'un premier fourreau pare-feu (20) autour d'une conduite de carburant (24) ;
la disposition d'un second fourreau pare-feu (18) autour du premier fourreau pare-feu (20) ; et
le moulage d'un manchon (30) par-dessus la conduite élastique (32), une portion du premier fourreau pare-feu (20), et une portion de la conduite de carburant (24) à laquelle la conduite élastique (32) est raccordée.

11. Procédé selon la revendication 10, dans lequel le raccord (34) comprend un écrou et une ferrure hydraulique qui s'accouplent avec la ferrure d'entrée d'injecteur de carburant (40).

12. Procédé selon la revendication 10 ou 11, dans lequel le dispositif de serrage (38) est ajustable par vis de telle sorte que la gaine puisse être mise en place et ôtée avec un outil ordinaire.

13. Procédé selon la revendication 10, 11 ou 12, dans lequel la gaine (36) est un cylindre continu.
